# EUROPEAN PATENT SPECIFICATION

(11) **EP 1 897 738 B1**
(45) Date of publication and mention of the grant of the patent: **26.10.2011**
(21) Application number: 07012021.7
(22) Date of filing: 20.06.2007
(51) Int. Cl.: B60J 11/00

(54) **Protective cover for means of transport, particularly campers**
Schutzabdeckung für Transportmittel, insbesondere Wohnmobile
Housse de protection pour moyen de transport, en particulier des campeurs

(30) Priority: 08.09.2006 IT MI20061710
(43) Date of publication of application: 12.03.2008
(73) Proprietor: CO.AR.CA. S.R.L., 23891 Barzano (LC) (IT)
(72) Inventor: Riboldi, Giuseppe, 23880 Casatenovo (LC) (IT); Riboldi, Marco, 23880 Casatenovo (LC) (IT)
(74) Representative: Petruzziello, Aldo

(56) References cited:
- EP-A1- 1 688 290
- WO-A1-2005/082661
- AU-B2- 591 015
- CN-A- 1 509 914
- DE-A1- 10 110 016
- DE-U1- 29 511 016
- ES-U- 1 056 588
- GB-A- 891 498
- US-A- 5 941 594
- US-A- 6 044 881
- US-A- 6 056 347
- US-A1- 2002 078 987
- US-A1- 2004 178 657

## Description

The present invention refers to a protective cover for means of transport in general and for campers in particular, it being understood that the protective cover according to the invention can be applied to other means of transport such as boats, trailers, caravans, mobile homes and the like. A prior art protective cover according to the preamble of the independent claim is known from DE 29511016 U.

When travelling a vehicle is inevitably exposed to the inclemencies of the weather, such as rain, snow, hail or sun. However, when the vehicle is parked, it is desirable for it to be protected from weather, to avoid rapid wear and damage.

For this purpose protective covers in the form of plasticized sheets which are placed on the vehicle so as to enclose at least the upper part of the vehicle are known to the art. However, application and removal of said sheets proves complex, long and troublesome for the user and in addition the vehicle is generally inaccessible once the covering sheets have been applied.

The need to cover the roof of the vehicle is felt to a greater extent in the case of transport means, such as campers, destined to accommodate users also during parking. In fact covering the roof would insulate the inside of the camper better with respect to outside climactic conditions (too hot or too cold). For this purpose, camper owners generally seek covered parking areas and stopping places. However, covered parking areas are rare and in any case costly.

Object of the present invention is to overcome the drawbacks of the prior art by providing a protective cover for means of transport that is cheap and immediate and simple to use for the user.

Another object of the present invention is to provide such a protective cover for means of transport that is versatile and suitable to be applied to different types of vehicles.

Yet another object of the present invention is to provide such a protective cover for means of transport that is efficient and able to provide adequate thermal insulation of the vehicle roof.

Yet another object of the present invention is to provide a protective cover that can be kept in a configuration occupying the least space when it is not in use.

These objects are achieved in accordance with the invention with the characteristics listed in appended independent claim 1.

Advantageous embodiments of the invention are apparent from the dependent claims.

According to the invention, the protective cover for means of transport, in particular campers, comprises an inflatable supporting structure adapted to be placed on the roof of the means of transport and supporting a waterproof covering sheet adapted to cover the roof of the means of transport.

Provision of the inflatable supporting structure allows rapid, simple positioning of the covering sheet on the roof of the means of transport. In fact, by simply inflating the supporting structure, the covering sheet is spread and tensioned, so as to cover the roof of the means of transport. Furthermore, the supporting structure can be deflated, so as to be in a configuration occupying the least space, so that it can be stored in a special container.

Further characteristics of the invention will be made clearer by the detailed description that follows, referring to a purely exemplifying and therefore non limiting embodiment thereof, illustrated in the appended drawings, wherein:
Figure 1 is a perspective view of a protective cover according to the invention applied to the roof of a camper.
Figure 2 is a bottom perspective view of the protective cover of Figure 1;
Figure 3 is a view like Figure 2, but illustrating the anchoring guys of the protective cover; and
Figure 4 is a perspective view showing the supporting structure of the protective cover according to the invention.
The protective cover according to the invention is described with the aid of the figures.

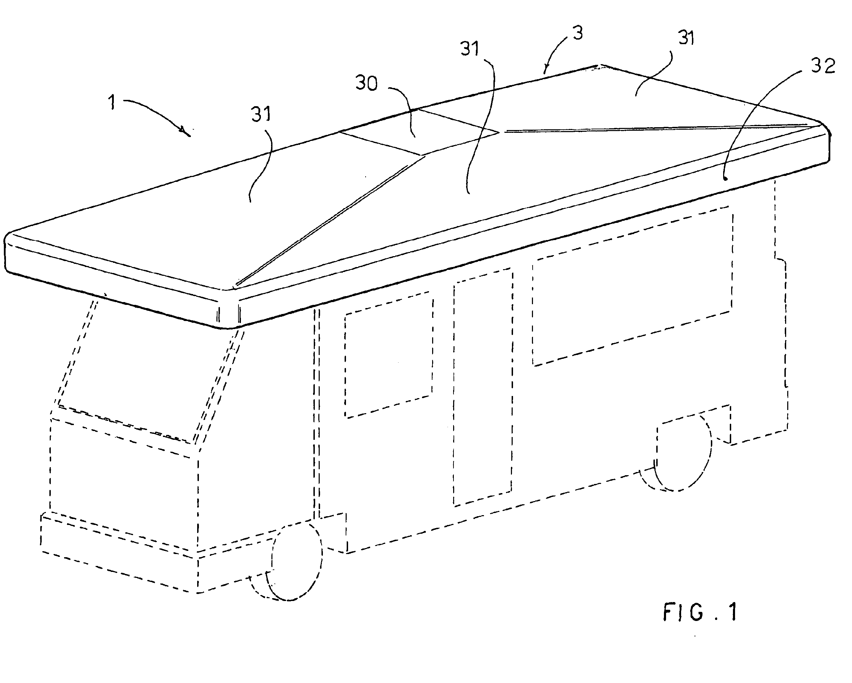

Figure 1 shows a camper on the roof of which is placed the protective cover according to the invention, denoted as a whole with reference numeral 1.

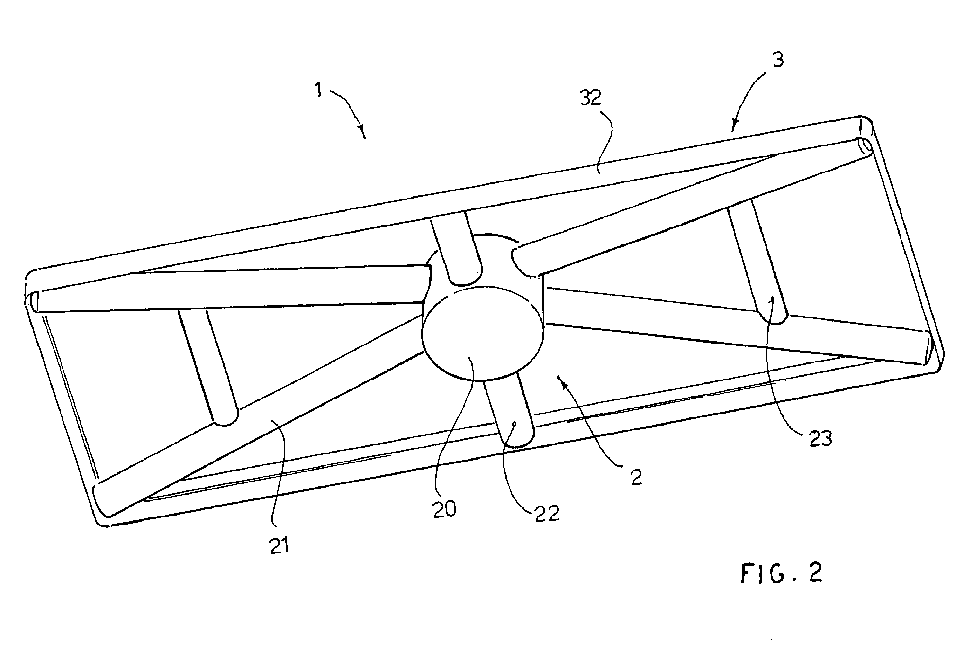

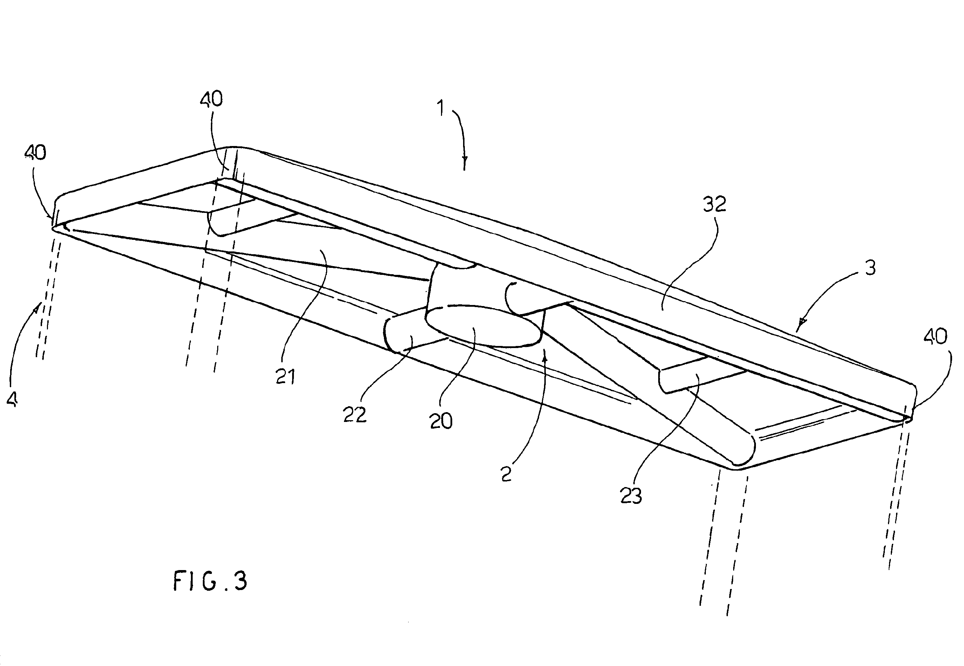

As shown in Figures 2 and 3, the protective cover 1 comprises a pneumatic supporting structure 2 supporting a waterproof covering sheet 3 to which are fixed guys 4 (Figure 3) for anchoring to the bodywork of the camper or to the ground.

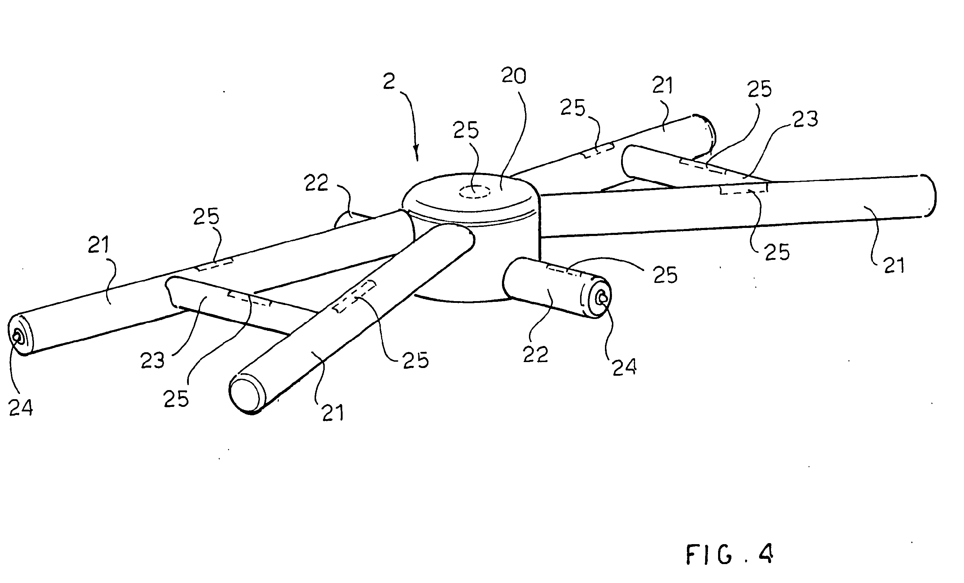

As shown better in Figure 4, the supporting structure 2 is obtained by inflating the shaped elements joined to one another. Inflation of the supporting structure 2 takes place by means of one or more inflation and deflation valves 24 situated on one or more elements.

The geometry of the supporting structure 2 is formed by an inflatable central cylindrical element 20, of adequate diameter and height, from which depart radially a plurality of tubular arms 21, 22, also inflatable. Considering that the roof of a camper is substantially rectangular in shape, the central element 20 is destined to be positioned at the centre of the camper roof. Therefore, by way of example, the supporting structure 2 has four diagonal arms 21 placed in diametrically opposite positions along the two diagonals of the camper roof, and two shorter transverse arms 22, placed in diametrically opposite positions along a transverse midline of the camper roof. The transverse arms 22 are placed on the central element 20 at a lower height with respect to the diagonal arms 21.

The diagonal arms 21 are held in the desired position by two or more tubular longitudinal members 23, also inflatable and disposed substantially parallel to the transverse arms 22 and at due distance from the central element 20.

The central element 20, the arms 21, 22 and the longitudinal members 23 are tubular elements obtained by closing portions of rubberised or plasticised fabric both longitudinally and on the bottom end. Perfectly tight closure of these elements is obtained with the technology typical of the materials used. In the case of rubberised fabrics, cold vulcanisation is carried out with self-vulcanizing solutions after treatment of the surfaces to be closed. In the case of plasticized or polyurethane fabrics, on the other hand, closure is achieved by high frequency welding or by use of special two-component adhesives.

The desired geometry is obtained by inflating the elements by means of one or more inflation and deflation valves 24 with are situated at the outer ends of the arms. By way of example Figure 4 shows two valves 24 disposed on a transverse arm 22 and a diagonal arm. However, only one valve or more than two valves can be provided and in any case the valve can also be positioned in the central element 20. Electric or manual pumps can be used for inflation. The working pressure of the supporting structure 2 must not be lower than 0.12 BAR. Deflation of the supporting structure 2 takes place by opening the inflation and deflation valves 24 used for inflation.

The connection and perfect air tightness between all elements of the supporting structure allows rapid inflation of the entire supporting structure 2, giving the covering sheet 3 the configuration of a roof with sloping walls. As shown in Figure 1, the covering sheet 3 has a central part 30 disposed on the cylindrical central element 20 of the supporting structure. Four sloping trapezoidal portions 31 depart from the central part 30. The covering sheet has a peripheral edge 32 in the form of a rectangular frame. The ends of the arms 21 and 22 of the supporting structure press on the inner surface of the peripheral edge 32 of the covering sheet, causing tensioning thereof.

On the top part of the central element 20 and on the top and side part of all the arms 21, 22 and the longitudinal members 23 are provided anchoring means 25 such as Velcro strips or mechanical coupling systems such as press studs, D-rings or eyelets, which will allow anchoring of the covering sheet 3 to the inflatable supporting structure 2.

The whole inflatable structure is covered with the sheet 3 of waterproof fabric with adequate resistance to atmospheric agents. A single covering sheet 3 suitably shaped or with a plurality of portions of fabric sewn, heat taped or welded together is used. The covering sheet 3 is anchored to the inflatable supporting structure 2 by means of Velcro or mechanical systems matching those of the supporting structure.

As shown in Figure 3, at the four corners of the peripheral edge 32 of the covering sheet 3 are provided mechanical coupling means 40, such as D-rings or eyelets, which serve to be able to receive the guys 4 for anchoring of the entire protective cover 1 to the camper or to the ground. The guys 4 can be, for example, ropes, cords, ribbons, elastic bands or belts. Even if in the figure the coupling means 30 for the guys 4 are shown at the four corners of the covering sheet 1, it is obvious that they can be evenly spaced at due distance along the entire perimeter of the covering sheet 1.

When the inflatable structure 2 is deflated, the entire protective cover 1 occupies a minimum space and can be stored in a special container placed on the camper roof.

Although a specific configuration of the inflatable supporting structure 2 has been shown by way of example in the figures, it is obvious that it can also be produced with different geometries from that illustrated herein, according to the various types of camper or requirements.

In fact numerous changes and modifications of detail within the reach of a person skilled in the art can be made to the present embodiment of the invention without thereby departing from the scope of the invention as set forth in the appended claims.

Some tables indicating the main characteristics of the materials that can be used for production of the protective covering 1 are set out hereunder by way of example.

Basic characteristics of the rubberised or plasticised fabrics of the inflatable supporting structure:

| | |
|---|---|
| fabric | polyester or polyamide |
| weave | cloth |
| size | 1100 dtex |

Characteristics of the waterproofed fabric (rubberised or plasticised) of the inflatable supporting structure:

| | |
|---|---|
| weight | > 1000 gr/mq (UNI 4818-74 p.3) , |
| breaking load O/T | > 2500 N/5cm (ISO 1421) |
| joined strip breaking load | breaking outside join (UNI 4818-74 p.6) |
| resistance to tearing | > 200 N |
| resistance to temperatures | - 35°C + 70°C |
| resistance to combustion | self-extinguishing |
| permeability to air | Kpa 200 (ISO 1420) |
| PI NK STAIN resistance to fungi | no stain |
| ASTM.E-21-80 resistance to moulds | no growth |
| resistance to ozone (50 p.p.h.m 12 mm - 30°C - 24h) | resistant |

Characteristics of covering sheet:

| | |
|---|---|
| fabric | 100% high tenacity polyester, Flame Retardant |
| resin finish | waterproof, breathable polyurethane |
| tensile strength | O/T : 2500 H |

As an alternative to resin finishing, the polystyrene covering sheet can also be spread on both sides with a mixture of polymers and/or co-polymers of vinyl chloride with a tensile strength of 2500 N or greater.

## Claims

1. A protective cover (1) for means of transport, in particular campers, comprising an inflatable supporting structure (2) adapted to be placed on the roof of the means of transport and supporting a waterproof covering sheet (3) adapted to cover the roof of the means of transport, said inflatable supporting structure (2) comprising an inflatable central element (20) destined to be placed on the central part of the roof of the means of transport **characterised by** four inflatable diagonal arms (21) disposed along the diagonals of the roof of the means of transport and two inflatable transverse arms (22) disposed along the transverse midline of the roof of the means of transport, said diagonal arms and said transverse arms (21, 22) departing from said central element (20).

2. A protective cover (1) according to claim 1, **characterised in that** said inflatable supporting structure (2) comprises two inflatable longitudinal members (23) disposed between two diagonal arms (21).

3. A protective cover (1) according to claim 1 or 2, **characterised in that** said inflatable supporting structure (2) comprises anchoring means (25) able to couple with matching anchoring means provided in said covering sheet (3) said anchoring means (25) comprising Velcro strips or mechanical coupling systems, such as press studs, D-rings or eyelets.

4. A protective cover (1) according to any one of the preceding claims, **characterised in that** said inflatable supporting structure (2) comprises at least one inflation/deflation valve (24).

5. A protective cover (1) according to any one of the preceding claims, **characterised in that** said covering sheet (3) is substantially rectangular in shape, with four sloping walls (31) and a peripheral edge (32) shaped as a rectangular frame.

6. A protective cover (1) according to any one of the preceding claims, **characterised in that** on the peripheral edge of said covering sheet (3) are provided mechanical anchoring means (40) able to receive guys (4) for anchoring of the protective cover (1) to the means of transport or to the ground.

7. A protective cover (1) according to any one of the preceding claims, **characterised in that** said inflatable supporting structure (2) is made of rubberised or plasticised fabric, such as polyester or polyamide.

8. A protective cover (1) according to any one of the preceding claims, **characterised in that** said waterproof covering sheet (3) comprises high tenacity polyester fabric, of the flame retardant type, with a tensile strength (O/T) of 2,500 N or greater comprising a waterproof, breathable polyurethane resin finish and/or a coating on both sides of polymers and/or co-polymers of vinyl chloride.

## Patentansprüche

1. Schutzabdeckung (1) für Transportmittel, insbesondere Wohnmobile; umfassend eine aufblasbare Tragkonstruktion (2), die ausgebildet ist, um auf das Dach des Transportmittels aufgegeben zu werden, und die eine wasserdichte Abdeckplane (3) trägt, welche ausgebildet ist, um das Dach des Transportmittels abzudecken, wobei die aufblasbare Tragkonstruktion (2) ein aufblasbares mittiges Element (20) umfasst, das dazu bestimmt ist, auf den mittigen Teil des Daches des Transportmittels aufgegeben zu werden, **gekennzeichnet durch** vier aufblasbare diagonale Arme (21), die entlang den Diagonalen des Daches des Transportmittels angeordnet werden, und zwei aufblasbare Querarme (22), die entlang der Quermittellinie des Daches des Transportmittels angeordnet werden, wobei die diagonalen Arme und die Querarme (21, 22) von dem mittigen Element (20) ausgehen.

2. Schutzabdeckung (1) nach Anspruch 1, **dadurch gekennzeichnet, dass** die aufblasbare Tragkonstruktion (2) zwei aufblasbare Längsglieder (23) umfasst, die zwischen zwei diagonalen Armen (21) angeordnet sind.

3. Schutzabdeckung (1) nach Anspruch 1 oder 2, **dadurch gekennzeichnet, dass** die aufblasbare Tragkonstruktion (2) Verankerungsmittel (25) umfasst, die sich mit zusammenpassenden Verankerungsmitteln, welche in der Abdeckplane (3) vorgesehen sind, koppeln lassen, wobei die Verankerungsmittel (25) Klettverschlussstreifen oder mechanische Kopplungssysteme wie Druckknöpfe, D-Ringe oder Ösen umfassen.

4. Schutzabdeckung (1) nach einem beliebigen der vorhergehenden Ansprüche, **dadurch gekennzeichnet, dass** die aufblasbare Tragkonstruktion (2) mindestens ein FülvAuslass-Ventil (24) umfasst.

5. Schutzabdeckung (1) nach einem beliebigen der vorhergehenden Ansprüche, **dadurch gekennzeichnet, dass** die Abdeckplane (3) eine im Wesentlichen rechteckige Form aufweist, mit vier geneigten Wänden (31) und einer Umfangskante (32), welche die Form eines rechteckigen Rahmens aufweist.

6. Schutzabdeckung (1) nach einem beliebigen der vorhergehenden Ansprüche, **dadurch gekennzeichnet, dass** an der Umfangskante der Abdeckplane (3) mechanische Verankerungsmittel (40) vorgesehen sind, die dazu geeignet sind, Abspannseile (4) zum Verankern der Schutzabdeckung (1) an dem Transportmittels oder an dem Boden aufzunehmen.

7. Schutzabdeckung (1) nach einem beliebigen der vorhergehenden Ansprüche, **dadurch gekennzeichnet, dass** die aufblasbare Tragkonstruktion (2) aus gummiertem oder plastifiziertem Textilstoff, beispielsweise aus Polyester oder Polyamid, hergestellt ist.

8. Schutzabdeckung (1) nach einem beliebigen der vorhergehenden Ansprüche, **dadurch gekennzeichnet, dass** die wasserdichte Abdeckplane (3) hochfesten Polyesterstoff vom flammhemmenden Typ mit einer Zugfestigkeit (O/T) von 2,500 N oder größer aufweist, welcher eine wasserdichte, atmungsaktive Polyurethanharzoberfläche und/oder eine Beschichtung auf beiden Seiten aus Polymeren und/oder Copolymeren von Venylchlorid aufweist.

## Revendications

1. Housse de protection (1) pour moyen de transport, en particulier des campeurs, comprenant une structure de support gonflable (2) adaptée pour être placée sur le toit du moyen de transport et supportant une bâche de couverture étanche à l'eau (3) adaptée pour couvrir le toit du moyen de transport, ladite structure de support gonflable (2) comprenant un élément central gonflable (20) destiné à être placé sur la partie centrale du toit du moyen de transport, **caractérisée par** quatre bras diagonaux gonflables (21) disposés le long des diagonales du toit du moyen de transport et deux bras transversaux gonflables (22) disposés le long de la ligne médiane transversale du toit du moyen de transport, lesdits bras diagonaux et lesdits bras transversaux (21, 22) provenant dudit élément central (20).

2. Housse de protection (1) selon la revendication 1, **caractérisée en ce que** ladite structure de support gonflable (2) comprend deux éléments longitudinaux gonflables (23) disposés entre deux bras diagonaux (21).

3. Housse de protection (1) selon la revendication 1 ou 2, **caractérisée en ce que** ladite structure de support gonflable (2) comprend des moyens d'ancrage (25) capables de s'accoupler à des moyens d'ancrage correspondants prévus dans ladite bâche de couverture (3), lesdits moyens d'ancrage (25) comprenant des bandes velcro ou des systèmes de couplage mécaniques, comme des boutons-pression, des anneaux en D ou des oeillets.

4. Housse de protection (1) selon l'une quelconque des revendications précédentes, **caractérisée en ce que** ladite structure de support gonflable (2) comprend au moins une valve de gonflage/dégonflage (24).

5. Housse de protection (1) selon l'une quelconque des revendications précédentes, **caractérisée en ce que** ladite bâche de couverture (3) a une forme essentiellement rectangulaire avec quatre parois en pente (31) et une bordure périphérique (32) formée comme un cadre rectangulaire.

6. Housse de protection (1) selon l'une quelconque des revendications précédentes, **caractérisée en ce que** des moyens d'ancrage mécaniques (40) capables de recevoir des haubans (4) sont prévus sur la bordure périphérique de ladite bâche de couverture (3) pour ancrer la housse de protection (1) au moyen de transport ou sur le sol.

7. Housse de protection (1) selon l'une quelconque des revendications précédentes, **caractérisée en ce que** ladite structure de support gonflable (2) est fabriquée en tissu caoutchouté ou plastifié comme du polyester ou du polyamide,

8. Housse de protection (1) selon l'une quelconque des revendications précédentes, **caractérisée en ce que** ladite bâche de couverture étanche à l'eau (3) comprend un tissu polyester haute ténacité, de type ignifuge, avec une résistance de traction (O/T) de 2,500 N ou plus, comprenant une finition de surface en résine polyuréthane étanche à l'eau et respirant et/ou un revêtement sur les deux côtés de polymères et/ou de copolymères de chlorure de vinyle.
